Europäisches Patentamt

European Patent Office

Office européen des brevets

(11) Publication number: **0 276 085**
**A1**

## (12) EUROPEAN PATENT APPLICATION

(21) Application number: 88300283.4

(22) Date of filing: 14.01.88

(51) Int. Cl.⁴: **F 16 H 13/08**

(30) Priority: 19.01.87 GB 8701124
30.05.87 GB 8712761

(43) Date of publication of application:
27.07.88 Bulletin 88/30

(84) Designated Contracting States:
CH DE FR GB IT LI SE

(71) Applicant: **Searle, Russell John**
**307, Petersham Road**
**Ham Richmond Surrey (GB)**

(72) Inventor: **Searle, Russell John**
**307, Petersham Road**
**Ham Richmond Surrey (GB)**

(54) **Planetary transmission systems.**

(57) In a planetary transmission system of the kind in whcih there are two circular rows $(A_1A_2)$ of balls or other rolling elements, the balls in each row $(A_1A_2)$ are arranged in opposed pairs and are urged resiliently into rolling contact with corresponding inner and outer races $(B_1C_1)$, $(B_2C_2)$ by individual resilient means (D), which may comprise Belleville spring washers, arranged in tubes (F) extending freely between the two balls of each opposed pair.

Fig.1.

Bundesdruckerei Berlin

## Description

The present invention relates to planetary transmission systems for use with, for example, speed step-up devices for electric induction motors to increase the customary speed of 3000 rpm by a factor of approximately 2.5. Increased speeds of this order result in substantial economies in the design of centrifugal pumps and blowers and other rotating machinery.

The present invention provides an output shaft concentric with the motor shaft and, because of its small size, a transmission system in accordance therewith can be incorporated in the motor housing.

Known friction planetary transmission systems use rolling elements, such as balls, in contact with inner and outer races, there being a cage member engaging the balls for the transmission of power. Such a transmission is described in GB A 1365929 in which the races are spring loaded into contact with the balls. Such known transmissions have not proven successful in practice as very high long term precision is required to ensure that every ball is in intimate contact with the races and transmits an equal proportion of the torque; such precision is not economic for large scale production for the applications envisaged.

In the present invention the above limitations have been successfully overcome by individually loading each ball against the races so that the transmitted torque is distributed against the races whereby the transmitted torque is distributed substantially equally to each ball and, in practice, the total torque capacity for a given size ball race is greatly increased and compensation is provided for unequal wear.

Compensation is also provided for manufacturing inaccuracies which may exist when standard commercially available ball races are used.

Thus, an object of the invention is to provide a transmission which has a high power capacity for its size, which has a long life expectancy, and which can be based on low cost, readily commercially available ball race components.

A system in accordance with the present invention provides a frictional planetary transmission comprising two annular rows of equal numbers of individually opposed rolling elements. The rolling elements in each row are retained in opposed pairs by cage members which form an input, output or reaction member. The opposed rolling elements in each row are urged apart by individual resilient means, which rotate with the rolling elements, into contact with inner and outer races. There is an input, output or reaction member connected to the inner and outer races.

Preferred embodiments of the invention will now be described, by way of example, with reference to the accompanying drawings, in which:-

Figure 1 is a longitudinal section through a transmission in accordance with the invention incorporated into the end housing of an electric motor,

Figure 2 is an axial or end view corresponding to Figure 1, and

Figure 3 is a similar view to Figure 1 but shows an alternative arrangement of the operating components of the transmission.

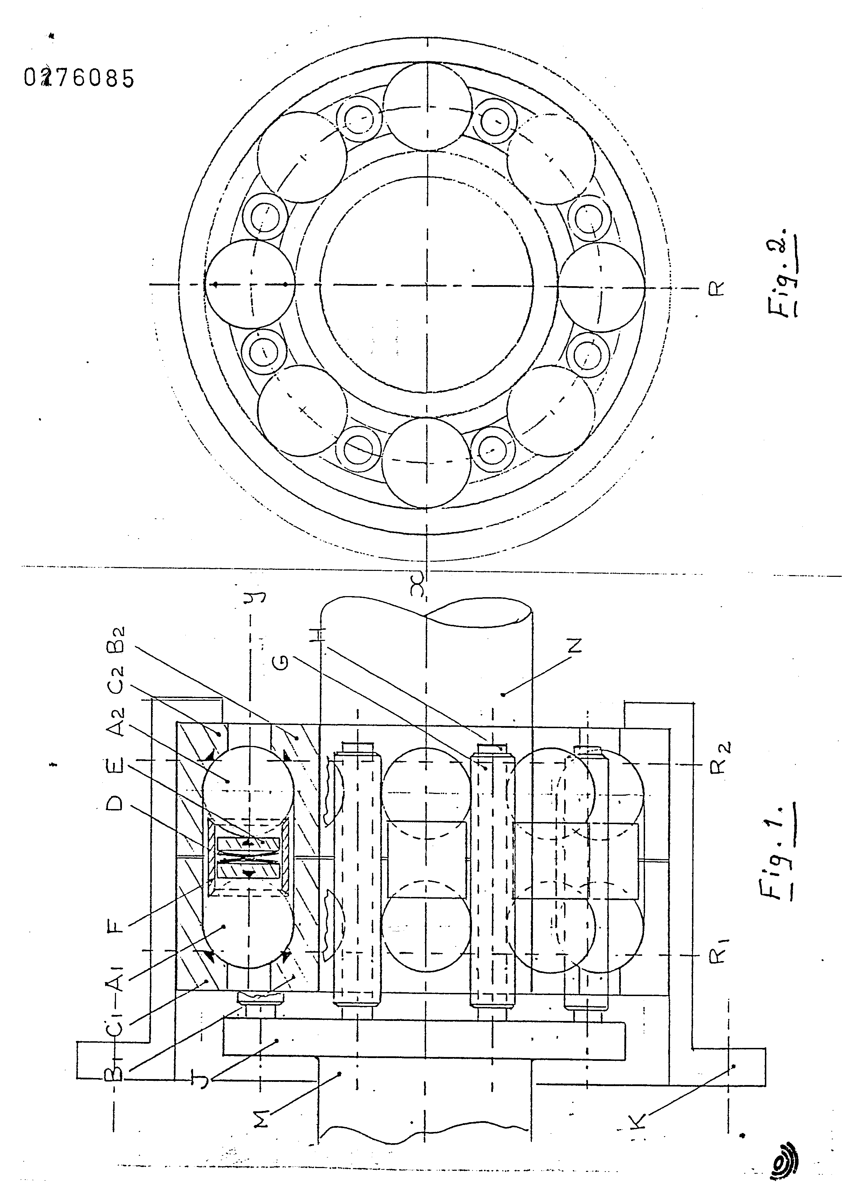

Referring firstly to Figure 1, a housing K is attached to an electric motor and supports stationary outer races $C_1C_2$. Inner races $B_1B_2$ are mounted on an output shaft N.

Cage members H, on which are rotatably mounted rollers G, are attached to a yoke J which is fixed to a motor shaft M. The cage members H pass between adjacent balls in each of two rows $A_1A_2$, the rollers G engaging the balls and retaining them in a position in which axes y, which pass through the centres of opposing balls in the rows $A_1A_2$, are parallel to the axis of rotation x. Opposed balls are urged apart by Belleville spring washers D, acting via pressure pads E, into contact with the opposed pairs of inner and outer races $B_1C_1$ and $B_2C_2$ at points which lie along respective radii $R_1R_2$. The pressure pads E and Belleville washers D are contained in tubes F which are supported loosely between opposing balls and rotate with them.

In operation, rotation of the motor shaft M and thence the yoke J, brings the rollers G into contact with the balls moving the latter around the stationary outer races $C_1C_2$, thus driving the inner races $B_1B_2$ and thence the output shaft N.

In a modified arrangement which is not illustrated, the cage members H have no rollers mounted thereon and engage directly with the peripheries of the balls.

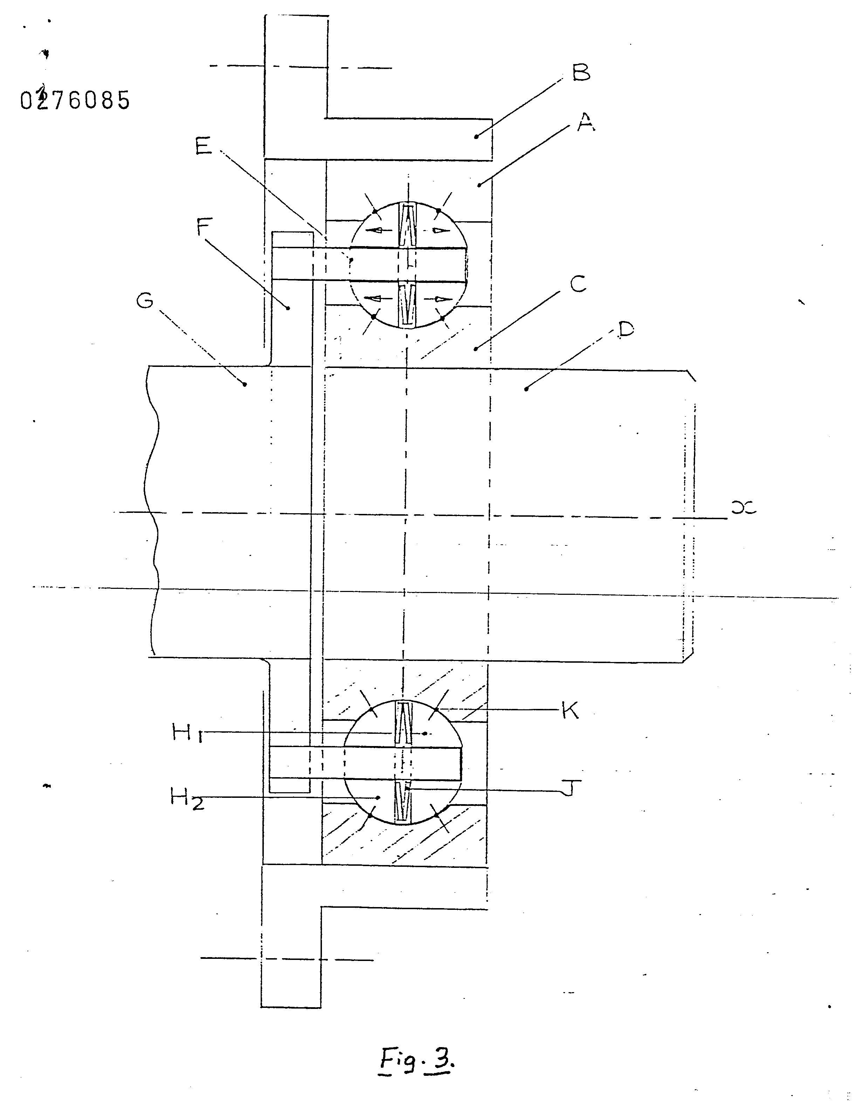

Figure 3 shows an alternative arrangement in which rolling elements $H_1H_2$ of hemispherical shape are rotatably mounted flat back to flat back on cage members E and are urged apart by Belleville spring washers J into contact with corresponding points on inner and outer races C and A. Two ball race assemblies, as shown, may be disposed side by side in the same manner as shown in Figures 1 and 2. Although the hemispherical rolling elements $H_1H_2$ are preferred, rolling elements of other shapes that have a circular section and a convergent surface may, if desired, equally well be employed.

## Claims

1. A friction planetary transmission system comprising two annular rows ($A_1A_2$) of rolling elements in which opposing pairs of rolling elements in each row ($A_1A_2$) are retained on parallel axes (y) by cage members (H) which are connected to an input, output or reaction member, characterised in that opposing pairs of the rolling elements are urged apart by individual resilient means (D) into contact with inner and outer races (B & C) which latter are connected to input, output or reaction members.

2. A transmission system according to claim 1, characterised in that the cage members (H) extend between adjacent rolling elements in both rows (A₁A₂) and are in contact with those rolling elements to exert driving torque thereon.

3. A transmission system according to claim 2, characterised in that cylindrical rollers (G) rotatably mounted on the cage members (H) pass between adjacent rolling elements in both rows (A₁A₂) and are in contact with those rolling elements to exert driving torque thereon.

4. A transmission system according to any preceding claim, characterised in that the rolling elements are spherical.

5. A transmission system according to claim 1, characterised in that opposing pairs of rolling elements in each row (A₁A₂) are rotatably mounted axially on cage members (E) and are urged apart by individual resilient means (J) into contact with inner and outer races ( C & A).

6. A transmission system according to any preceding claim, characterised in that the individual resilient means (D, J) comprises Belleville washers.

7. A transmission system according to any preceding claim, characterised in that it forms part of an electric motor.

0276085

Fig. 2.

Fig. 1.

0276085

Fig. 3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| A | FR-A- 559 124 (R. ERBAN)<br>* page 2, lines 26-41; figure 2 *<br>--- | 1,2 | F 16 H 13/08 |
| A | US-A-3 160 031 (K.C. BUGG)<br>* whole document *<br>--- | 1,3 | |
| A | FR-A- 491 865 (G. RENNERFELT)<br>* figures 1, 2; page 2, lines 3-44 *<br>--- | 1,2 | |
| A | DE-C- 440 263 (R. ERBAN)<br>* figures 24, 25; page 4, lines 31-47 *<br>--- | 1 | |
| A | DE-B-1 172 766 (INDIVE)<br>* figure 1 *<br>--- | 7 | |
| A | PATENT ABSTRACT OF JAPAN, vol. 9, no. 185 (E-332) e1908r; & JP - A - 60 055 839 (MITSUBISHI) 01-04-1985<br>----- | 7 | |

**TECHNICAL FIELDS SEARCHED (Int. Cl.3)**

F 16 H 13/00
H 03 K 7/00

The present search report has been drawn up for all claims

| Place of search | Date of completion of the search | Examiner |
|---|---|---|
| BERLIN | 22-03-1988 | GERTIG I. |